(19) Europäisches Patentamt
European Patent Office
Office européen des brevets

(11) **EP 2 241 902 B1**

(12) **FASCICULE DE BREVET EUROPEEN**

(45) Date de publication et mention
de la délivrance du brevet:
**12.12.2012  Bulletin 2012/50**

(51) Int Cl.:
***G01S 5/12*** *(2006.01)*    ***G01S 5/20*** *(2006.01)*

(21) Numéro de dépôt: **10003443.8**

(22) Date de dépôt: **30.03.2010**

(54) **Procéde de localisation d'un dispositif portable émetteur et système d'interface homme/ machine mettant en oeuvre ce procédé**

Lokalisation eines mobilen Senders mit einer Schnittstelle Mensch/Maschine zum Auslösen der Lokalisationsvorgangs

Determination of the position of a mobile transmitter comprising an interface human/machine to trigger the positioning

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **06.04.2009   FR 0901658**

(43) Date de publication de la demande:
**20.10.2010   Bulletin 2010/42**

(73) Titulaire: **Inside Secure**
**13856 Aix-en-Provence Cedex 3 (FR)**

(72) Inventeurs:
• **Pernisek, Florian**
**13090 Aix en Provence (FR)**
• **Charrat, Bruno**
**13090 Aix en Provence (FR)**

(74) Mandataire: **Marchand, André et al**
**OMNIPAT**
**24 Place des Martyrs de la Résistance**
**13100 Aix-en-Provence (FR)**

(56) Documents cités:
EP-A- 1 094 335     US-A1- 2004 203 904
US-A1- 2005 255 855     US-A1- 2006 267 833
US-A1- 2008 133 126     US-B1- 7 502 619

**Description**

L'invention concerne un procédé de détection de l'emplacement d'un objet à l'intérieur d'une aire de référence. Plus particulièrement, l'invention concerne un procédé de localisation d'un dispositif portable émettant un champ électrique et/ou un champ magnétique à l'intérieur d'une aire de référence.

Récemment, un intérêt grandissant est apparu pour les techniques permettant de localiser des objets au sein d'une aire de référence, afin de créer des interfaces homme/machine. Un exemple simple d'une interface homme/machine, et l'un des plus couramment utilisé, est la souris d'un ordinateur.

Microsoft Surface® est une interface homme/machine innovante qui a été récemment présentée et qui est décrite dans la demande de brevet américaine N° 2006/0284874. Cette demande de brevet décrit un procédé et un dispositif de détection d'un ou plusieurs objets par rapport à un écran d'affichage sur lequel des images (par exemple des photos) sont projetées. Une source de lumière infrarouge dirige une lumière infrarouge vers l'écran .d'affichage. La lumière infrarouge est ensuite réfléchie par des objets situés sur ou à proximité de l'écran d'affichage et cette lumière réfléchie est capturée par une caméra vidéo numérique. La présence et/ou le mouvement des objets, tel que les mains d'un utilisateur, sont ainsi détectés par le système, et un ordinateur connecté au projecteur et à la caméra peut calculer, au moyen d'algorithmes de flot optique, quelle action doit être exécutée et ce que doit afficher l'écran d'affichage. Cette application permet à un ou plusieurs utilisateurs d'effectuer des actions telles que la translation, la rotation et le redimensionnement d'articles projetés sur la surface d'affichage.

Les technologies sans fil et sans contact devenant de plus en plus omniprésentes, les utilisateurs sont de plus en plus nombreux à être équipés de dispositifs portables tels que des téléphones mobiles, des assistants numériques personnels (PDA) ou équivalent, qui émettent des champs magnétiques ou électriques radiofréquence (RF) ou ultra-haute fréquence (UHF). Par exemple, les dispositifs NFC (Near Field Communication) tels que les PDA NFC ou les téléphones portables NFC comprennent un lecteur NFC qui émet un champ magnétique RF oscillant par exemple à 13,56 MHz. De plus, classiquement, les téléphones portables émettent également un champ électromagnétique UHF ayant une composante de champ électrique afin de communiquer avec un réseau de téléphonie mobile.

Des modes de réalisation de l'invention comprennent l'observation selon laquelle les champs électriques ou les champs magnétiques émis par de tels dispositifs portables peuvent être utilisés pour détecter leur emplacement ou leur déplacement à l'intérieur d'une aire de référence.

Des modes de réalisation de l'invention comprennent également l'observation selon laquelle les dispositifs portables émettant un champ électrique ou un champ magnétique peuvent être utilisés comme de nouveaux types d'interfaces homme/machine afin d'initier des opérations interactives en fonction de leur emplacement à l'intérieur d'une aire de référence..

Plus particulièrement, des modes de réalisation de l'invention concernent un procédé de localisation d'un dispositif portable émetteur émettant un champ électrique et/ou un champ magnétique, tel qu'un téléphone portable émettant un champ électrique ou un dispositif NFC émettant un champ magnétique, le procédé comprenant les étapes consistant à : définir une aire de référence, disposer au moins une sonde de champ électrique et/ou de champ magnétique à proximité ou à l'intérieur de l'aire de référence, disposer le dispositif portable à l'intérieur de l'aire de référence, recevoir de la sonde un signal de détection du champ électrique et/ou du champ magnétique émis par le dispositif portable, et analyser le signal de détection fourni par la sonde et en déduire l'emplacement du dispositif portable à l'intérieur de l'aire de référence.

Selon un mode de réalisation, l'analyse du signal de détection comprend les étapes consistant à analyser l'amplitude du signal de détection afin de fournir une valeur d'amplitude, et à déterminer à partir de la valeur d'amplitude l'emplacement du dispositif portable à l'intérieur de l'aire de référence.

Selon un mode de réalisation, l'analyse du signal de détection comprend les étapes consistant à analyser la phase du signal de détection afin de fournir une valeur de phase, et à déterminer à partir de la valeur de phase l'emplacement du dispositif portable à l'intérieur de l'aire de référence.

Selon un mode de réalisation, le procédé comprend les étapes consistant à : disposer au moins deux sondes de champ électrique et/ou de champ magnétique à proximité ou à l'intérieur de l'aire de référence, recevoir des sondes au moins deux signaux de détection et déterminer l'emplacement du dispositif portable à l'intérieur de l'aire de référence à partir de la différence de phase entre les signaux de détection.

Selon un mode de réalisation, le procédé comprend les étapes consistant à : disposer au moins deux sondes de champ électrique et/ou de champ magnétique à proximité ou à l'intérieur de l'aire de référence, recevoir des sondes au moins deux signaux de détection et déterminer l'emplacement du dispositif portable à l'intérieur de l'aire de référence à partir des amplitudes des signaux de détection.

Selon un mode de réalisation, le procédé comprend les étapes consistant à : disposer au moins trois sondes de champ électrique et/ou de champ magnétique à proximité ou à l'intérieur de l'aire de référence, recevoir des sondes au moins trois signaux de détection, déterminer une première différence de phase entre une première paire de signaux de détection, déterminer au moins une seconde différence de phase entre une seconde paire de signaux de détection, et déterminer l'emplacement du dispositif portable à l'intérieur de l'aire de référence à partir des première et seconde différences de phase.

Selon un mode de réalisation, le procédé comprend les étapes consistant à : définir des emplacements prédéterminés à l'intérieur de l'aire de référence, analyser le signal de détection fourni par la sonde, et en déduire sur quel emplacement prédéterminé est situé le dispositif portable.

Des modes de réalisation de l'invention concernent également un procédé permettant d'exécuter au moins une action interactive, comprenant une étape de localisation d'un dispositif portable. émetteur à l'intérieur d'une aire de référence selon le procédé décrit ci-dessus, et une étape d'initiation de l'action interactive en fonction de l'emplacement du dispositif portable à l'intérieur de l'aire de référence.

Selon un mode de réalisation, l'initiation de l'action interactive comprend une étape consistant à fournir des signaux de contrôle interactifs à un dispositif externe configuré pour effectuer l'action interactive.

Des modes de réalisation de l'invention concernent également un système d'interface homme/machine à utiliser avec un dispositif portable émettant un champ électrique et/ou un champ magnétique, tel qu'un téléphone portable émettant un champ électrique ou un dispositif NFC émettant un champ magnétique, et comprenant au moins une sonde de champ électrique et/ou de champ magnétique fournissant un signal de détection, un dispositif de détermination d'emplacement, le dispositif de détermination d'emplacement étant configuré pour analyser le signal de détection, en déduire l'emplacement du dispositif portable à l'intérieur d'une aire de référence, et initier au moins une action interactive en fonction de l'emplacement du dispositif portable.

Selon un mode de réalisation, le dispositif de détermination d'emplacement est configuré pour déterminer l'emplacement du dispositif portable à partir de la valeur d'amplitude du signal de détection.

Selon un mode de réalisation, le dispositif de détermination d'emplacement est configuré pour déterminer l'emplacement du dispositif portable à partir de la valeur de phase du signal de détection.

Selon un mode de réalisation, le système comprend au moins deux sondes de champ électrique et/ou de champ magnétique à proximité ou à l'intérieur de l'aire de référence, fournissant des signaux de détection, et le dispositif de détermination d'emplacement est configuré pour déterminer l'emplacement du dispositif portable à l'intérieur de l'aire de référence à partir de la différence de phase entre les signaux de détection.

Selon un mode de réalisation, le système comprend au moins deux sondes de champ électrique et/ou de champ magnétique à proximité ou à l'intérieur de l'aire de référence, fournissant des signaux de détection, et le dispositif de détermination d'emplacement est configuré pour déterminer l'emplacement du dispositif portable à l'intérieur de l'aire de référence à partir des amplitudes des signaux de détection.

Selon un mode de réalisation, le système comprend au moins trois sondes de champ électrique et/ou de champ magnétique à proximité ou à l'intérieur de l'aire de référence, les sondes fournissant des signaux de détection, et le dispositif de détermination d'emplacement est configuré pour déterminer une première différence de phase entre une première paire de signaux de détection, déterminer au moins une seconde différence de phase entre une seconde paire de signaux de détection, et déterminer l'emplacement du dispositif portable à l'intérieur de l'aire de référence à partir des première et seconde différences de phase.

Selon un mode de réalisation, le dispositif de détermination d'emplacement est configuré pour mémoriser des emplacements prédéterminés à l'intérieur de l'aire de référence, associer au moins une action interactive à chaque emplacement prédéterminé du dispositif portable, déterminer à partir du signal de détection sur quel emplacement prédéterminé est situé le dispositif portable, et initier l'action interactive qui est associée à l'emplacement du dispositif portable.

Selon un mode de réalisation, le dispositif de détermination d'emplacement est configuré pour enregistrer, pour chaque emplacement prédéterminé, d'un ensemble de valeurs d'amplitude et/ou de phase des signaux de détection lorsque le dispositif portable est placé sur l'emplacement.

Des modes de réalisation d'un procédé de localisation d'un dispositif portable émetteur selon l'invention et d'un système d'interface homme/machine selon l'invention seront exposés dans la description suivante faite à titre non limitatif en relation avec les figures jointes parmi lesquelles :

- la figure 1 illustre un premier mode de réalisation du procédé et du système d'interface homme/machine,
- les figures 2A, 2B, 2C illustrent un second mode de réalisation du procédé,
- la figure 3 illustre un second mode de réalisation du système d'interface homme/machine,
- la figure 4 illustre un troisième mode de réalisation du système d'interface homme/machine,
- la figure 5 illustre un troisième mode de réalisation du procédé, et
- la figure 6 illustre un quatrième mode de réalisation du procédé.

Des modes de réalisation d'un procédé de localisation d'un dispositif portable émetteur selon l'invention comprennent les étapes consistant à définir une aire de référence et à agencer des sondes de champ électrique et/ou de champ magnétique autour de l'aire de référence. Un dispositif portable émettant un champ électrique et/ou un champ magnétique est placé à l'intérieur de l'aire de référence, et les sondes fournissent des signaux de détection. Chaque signal de détection est l'image du champ électrique ou magnétique émis par le dispositif portable tel que détecté par la sonde considérée, et son amplitude et sa phase dépendent de la distance entre le dispositif portable et la sonde. Les signaux de détection sont utilisés pour déterminer l'emplacement du dispositif portable.

Le système d'interface homme/machine reçoit des signaux de détection fournis par les sondes et évalue l'emplacement du dispositif portable à l'intérieur de l'aire de référence. Des opérations peuvent être assignées aux divers emplacements sur l'aire de référence, et sont exécutées lorsqu'un utilisateur place le dispositif portable à un certain emplacement.

**Premier exemple de réalisation du procédé de localisation d'un dispositif portable émetteur**

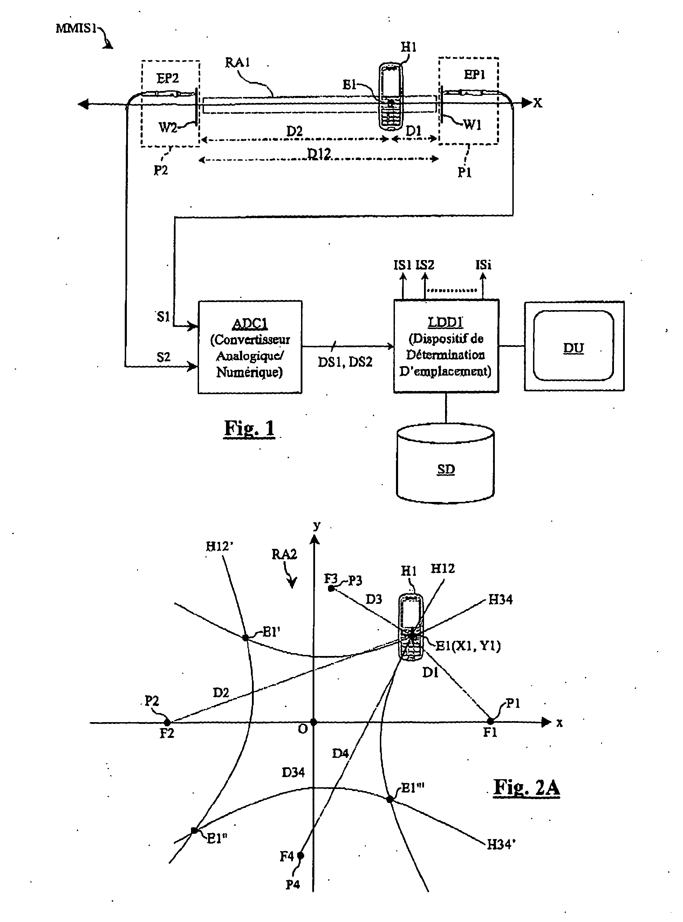

Un premier mode de réalisation du procédé est illustré sur la figure 1. Une aire de référence RA1 est définie. L'aire de référence RA1 peut se situer sur une surface comme une table ou un bureau, le sol, un mur, etc. Par conséquent, elle peut être horizontale, verticale, ou avoir n'importe quelle orientation ou n'importe quelle forme, par exemple carrée, circulaire, etc. L'aire de référence présente une surface de l'ordre de quelques dizaines de centimètres carrés à quelques mètres carrés au maximum, correspondant à l'amplitude maximale des mouvements que l'utilisateur du téléphone peut faire avec son bras et éventuellement son corps, dans une pièce de dimensions usuelles. Deux sondes P1, P2 sont agencées à l'opposé l'une de l'autre sur des côtés de l'aire de référence RA1.

Dans ce mode de réalisation, l'aire de référence RA1 est sensiblement un espace unidimensionnel selon un axe X selon lequel les sondes P1, P2 sont agencées. L'aire de référence peut être considérée comme une ligne confondue avec l'axe X, ou un rectangle fin aligné sur l'axe X, présentant une petite largeur et une longueur égale à la distance entre les sondes P1, P2.

Les sondes P1, P2 illustrées sur la figure 1 sont des sondes de champ électrique. La sonde P1 comprend par exemple un fil conducteur W1 et une sonde de tension EP1 afin de détecter une tension dans le fil conducteur. De la même façon, la sonde P2 comprend un fil conducteur W2 et une sonde de champ électrique EP2 afin de détecter une tension dans le fil conducteur W2. Les fils conducteurs W1, W2 sont par exemple conformés pour former des antennes quart d'onde et présentent par conséquent une longueur de $\lambda/4$, $\lambda$ étant la longueur d'onde d'une onde électromagnétique à détecter, dont la valeur est donnée par la relation $\lambda = v/f$, $v$ étant la vitesse de l'onde électromagnétique émise par un dispositif portable H1 et f étant la fréquence de l'onde électromagnétique. Par exemple, pour détecter un signal de 900 MHz émis par un dispositif portable comme un téléphone portable, chaque fil conducteur W1, W2 présente une longueur de 8,3 cm si l'on considère que la vitesse de la lumière $v$ est d'environ $3 \times 10^8$ m/s (soit $\lambda = 0,333$ m).

Les sondes P1, P2 sont séparées l'une de l'autre par une distance connue D12. Lorsque le dispositif portable H1 est placé sur l'aire de référence RA1, les sondes P1, P2 détectent le champ électrique émis par le dispositif portable et fournissent des signaux de détection S1, S2.

Le fait de connaître la distance D12 permet de déterminer l'emplacement du dispositif portable sur l'axe X sans nécessiter d'étape d'étalonnage. L'emplacement du dispositif portable H1 peut être déterminé au moyen de la différence de phase entre les signaux S1, S2 ou la différence d'amplitude entre les signaux S1, S2, comme cela sera expliqué plus loin.

Localisation du dispositif portable émetteur au moyen de la différence de phase entre S1, S2

Puisque l'aire de référence est ici sensiblement une ligne ou un rectangle fin, la distance D12 peut être considérée comme la somme d'une distance D1 entre la sonde P1 et le dispositif portable H1, et une distance D2 entre 1a sonde P2 et le dispositif portable. Par conséquent, il peut être écrit :

$$(\text{équation 1}) \qquad \qquad D1 + D2 = D12$$

Pour déterminer l'emplacement du dispositif portable à l'intérieur de l'aire de référence, D1 et D2 doivent être déterminés. Le signal électromagnétique émis par le dispositif portable H1 se déplace à la vitesse de la lumière, et 1a phase des signaux S1, S2 fournis par les sondes P1, P2 dépendent de D1 et D2 :

$$(\text{équation 2a}) \qquad \varphi1[\text{modulo } 2\pi] = 2\pi * D1/\lambda$$

$$(\text{équation 2b}) \qquad \varphi2[\text{modulo } 2\pi] = 2\pi * D2/\lambda$$

Il est supposé que les valeurs absolues des phases $\varphi 1$, $\varphi 2$ ne peuvent être mesurées puisque la phase à l'origine de l'onde émise (c'est-à-dire la phase de l'emplacement du dispositif portable) n'est pas connue. Cependant, la différence de phase $\Delta\varphi=\varphi 1-\varphi 2$ peut être mesurée et permet de déterminer D1 et D2. En fait, si la distance D12 entre la sonde est inférieure ou égale à la longueur d'onde $\lambda$, les équations 2a et 2b ne sont plus modulo $2\pi$ et peuvent être écrites ainsi :

$$(\text{équation 2a'}) \qquad D1=\varphi 1*\lambda/2\pi$$

$$(\text{équation 2b'}) \qquad D2=\varphi 2*\lambda/2\pi$$

En combinant les équations 2a' et 2b', on obtient :

$$(\text{équation 3}) \qquad D1-D2=\Delta\varphi*K1$$

avec K1=$\lambda/2\pi$ et $\Delta\varphi=\varphi 1-\varphi 2$

En combinant les équations 1 et 3, on obtient :

$$(\text{équation 4}) \qquad D1=(\Delta\varphi*K1+D12)/2$$

$$(\text{équation 5}) \qquad D2=D12-D1$$

Puisque K1 est connu et que $\Delta\varphi$ peut être mesuré grâce aux sondes P1, P2, D1 et D2 peuvent être déterminées au moyen des équations 4 et 5.

<u>Localisation du dispositif portable émetteur au moyen de l'amplitude de S1, S2</u>

Alternativement, l'amplitude des signaux détectés par les sondes est utilisée pour déterminer l'emplacement du dispositif portable. La sonde P1 détecte un signal d'amplitude M1 et la sonde P2 détecte un signal d'amplitude M2. Dans une approximation simplificatrice, il est supposé que l'amplitude décroît proportionnellement à la distance par rapport au dispositif portable émetteur et que la relation entre l'amplitude et la distance est une fonction affine F (c'est-à-dire une fonction linéaire avec une translation) du type « -ax+b » avec une pente négative. Par conséquent, il peut être écrit :

$$(\text{équation 6a}) \qquad M1=M0-K2*D1$$

$$(\text{équation 6b}) \qquad M2=M0-K2*D2$$

M0 étant l'amplitude maximale détectée lorsque la distance entre les sondes et l'objet émetteur est nulle, K2 étant une constante représentant la pente de la fonction F qui est déterminée au moyen d'une étape d'étalonnage.

En combinant les équations 6a et 6b, on obtient :

$$(\text{équation 7}) \qquad D1-D2=-(M1-M2)/K2$$

Puis, en combinant l'équation 7 et l'équation 1, on obtient :

$$(\text{équation 8}) \qquad D1-(D12-D1)=-(M1-M2)/K2$$

ou :

$$2D1 = D12 - (M1-M2)/K2 \qquad \text{(équation 9)}$$

$$D1 = D12/2 - (M1-M2)/2K2 \qquad \text{(équation 10)}$$

$$D2 = D12 - D1 \qquad \text{(équation 11)}$$

Puisque K2 est connu et que M1-M2 peut être mesuré grâce aux sondes P1, P2, D1 et D2 peuvent être déterminés au moyen des équations 10 et 11.

Alternativement, l'étape d'étalonnage servant à déterminer la pente de K2 est remplacée par une étape d'étalonnage plus simple visant à déterminer seulement la valeur de l'amplitude M0 à proximité des sondes P1, P2. Dans ce cas, les équations 6a, 6b peuvent être écrites ainsi :

$$M1 - M0 = -K2 \ast D1 \qquad \text{(équation 6a')}$$

$$M2 - M0 = -K2 \ast D2 \qquad \text{(équation 6b')}$$

et combinées par division afin d'obtenir :

$$D2/D1 = (M2-M0)/(M1-M0)$$

En nommant « P » la valeur « (M2-M0) / (M1-M0) », on obtient les équations alternatives 10', 11' suivantes :

$$D1 = D12/(1+P) \qquad \text{(équation 10')}$$

$$D2 = D12 - D1 \qquad \text{(équation 11')}$$

Puisqu'il est possible de déterminer M0 grâce à une étape d'étalonnage et de mesurer M1, M2 grâce aux sondes P1, P2, D1 et D2 peuvent être déterminés au moyen des équations 10' et 11'.

**Premier exemple de réalisation d'un système d'interface homme/machine**

La figure 1 illustre également un mode de réalisation d'un système d'interface homme/machine MMIS1 mettant en oeuvre l'un des procédés décrits ci-dessus, ou les deux. Le système MMIS1 comprend des sondes P1, P2 et comprend également un convertisseur analogique-numérique ADC1 et un dispositif de détermination d'emplacement LDD1. Les signaux de détection S1, S2 fournis par les sondes P1, P2 sont numérisés par le convertisseur ADC1, qui fournit des signaux numérisés correspondants DS1, DS2 au dispositif LDD1. Le dispositif LDD1 comprend un dispositif de stockage SD contenant des programmes et des algorithmes prévus pour analyser les signaux DS1, DS2, extraire la différence de phase ou leur amplitude ou les deux, et exécuter des algorithmes afin de trouver les distances D1, D2 et ainsi localiser le dispositif portable H1 selon au moins l'un des procédés décrits ci-dessus. Si le procédé basé sur une mesure des amplitudes M1, M2 est utilisé par le dispositif LDD1, une étape d'étalonnage est effectuée afin de définir la constante K2 ou de définir l'amplitude M0 à une distance nulle des sondes (Cf. les équations alternatives 10', 11' ci-dessus). Par exemple, l'utilisateur doit placer le dispositif portable à deux emplacements différents par rapport à au moins une sonde, en supposant que les sondes sont identiques, afin de définir K2. De façon alternative, si le procédé alternatif est utilisé, l'utilisateur doit placer le dispositif portable juste à côté d'au moins une sonde, afin de définir M0.

Le dispositif LDD1 peut optionnellement être équipé d'une unité d'affichage DU. Le convertisseur analogique-numérique ADC1 peut également faire partie du dispositif LDD1. Dans un mode de réalisation, le dispositif LDD1 est un ordinateur personnel, le dispositif de stockage SD est un disque dur et l'unité d'affichage DU est un moniteur. Le moniteur peut avoir comme interface un écran tactile et/ou l'ordinateur personnel peut également être équipé d'un organe d'entrée tel qu'un clavier (non illustré).

Une fois que l'emplacement du dispositif portable a été calculé, le dispositif LDD1 fournit des signaux de contrôle interactifs IS1, IS2...ISi en fonction d'actions assignées aux divers emplacements du dispositif portable. Ces signaux de contrôle sont utilisés pour initier des opérations comme « Allumer la lumière », « Eteindre la lumière », « Allumer la télévision », « Eteindre la télévision », « Allumer la radio », « Eteindre la radio », « Diapositive suivante », « Diapositive précédente » (pour un système de projection d'image lors d'une présentation) etc. Ces opérations sont des actions définies par l'utilisateur, un administrateur, ou par le fabricant ou le fournisseur du système.

Une étape préliminaire peut être effectuée avant que le système soit utilisé afin de définir les actions à exécuter lorsque le dispositif portable H1 est détecté dans les divers emplacements de l'aire de référence. Elle peut consister à choisir des actions à partir d'un menu prédéfini. Par exemple, l'aire de référence pourrait être divisée en plusieurs zones différentes (non illustrées), comme une zone Z1 à proximité de la sonde P1, une zone Z2 au centre, et une zone Z3 à proximité de la sonde P2.

Pour faciliter l'utilisation du dispositif, chaque emplacement peut également être marqué par des symboles, des photos, des mots, etc. afin d'indiquer à l'utilisateur où placer le dispositif portable pour qu'une action soit exécutée. Des modèles préconfigurés, par exemple une icône représentant une ampoule pour indiquer que la lumière va s'allumer, peuvent être fournis. De plus, ces modèles, qui peuvent également indiquer où placer les sondes, peuvent varier en fonction du type de dispositif portable à utiliser, le nombre de sondes, la taille et la forme de l'aire de référence, etc.

Un autre exemple d'utilisation consiste à connecter le système d'interface home/machine à un système audio ou à la lumière, et à utiliser le mouvement du dispositif portable comme un interrupteur coulissant pour augmenter ou diminuer le volume ou l'intensité de la lumière. Le système MMIS1 est configuré de telle sorte qu'au fur et à mesure que le dispositif portable est déplacé vers la sonde P1, l'amplitude M1 augmente alors que l'amplitude M2 diminue et le volume ou l'intensité de la lumière augmente. Inversement, au fur et à mesure que le dispositif portable est déplacé vers la sonde P2, l'amplitude M2 augmente alors que l'amplitude M1 diminue, et le volume ou l'intensité de la lumière diminue.

Dans d'autres modes de réalisation, les sondes P1, P2 peuvent également être des sondes de champ magnétique, par exemple des bobines d'antenne configurées pour détecter un champ magnétique émis par un dispositif portable comprenant un contrôleur NFC (Near Field Communication). Par exemple, avec un champ magnétique de 13,56 MHz émis par un téléphone portable NFC conforme à la norme ISO 14443 ou ISO 15693, la longueur d'onde $\lambda$ est égale à 22,1 m et représente la distance maximale entre les sondes P1, P2 si la méthode de différence de phase est utilisée pour localiser le dispositif portable.

**Second exemple de réalisation du procédé de localisation d'un dispositif portable émetteur**

Un second mode de réalisation d'un procédé de localisation d'un dispositif portable émetteur à l'intérieur d'une aire de référence est illustré sur la figure 2A. Une aire de référence bidimensionnelle RA2 est définie. Des emplacements sont définis à l'intérieur de l'aire par rapport à un système de coordonnées orthogonales Oxy présentant un centre O, un axe des x et un axe des y. Deux sondes P1, P2 sont agencées à l'opposé l'une de l'autre sur des côtés de l'aire de référence RA2, en des points F1, F2 qui sont par exemple situés sur l'axe X (l'axe des x étant par exemple défini comme passant par F1, F2). Deux autres sondes P3, P4 sont agencées à l'opposé l'une de l'autre sur des côtés de l'aire de référence RA2, par exemple en des points F3, F4 situés par exemple à proximité de l'axe des y. Il est supposé ici que les coordonnées x, y respectives des points F1, F2, F3, F4 sont connues. Les sondes P1-P4 sont par exemple des sondes de champ électrique du type décrit ci-dessus, ou des sondes de champ magnétique configurées pour fonctionner avec un dispositif portable NFC.

Le dispositif portable H1 est ensuite agencé à l'intérieur de l'aire de référence RA2, en un point E1. Les sondes P1, P2, P3, P4 détectent le champ électrique ou le champ magnétique émis par le dispositif portable et fournissent des signaux de détection S1, S2, S3, S4.

Localisation du dispositif portable émetteur au moyen de la différence de phase entre S1, S2, S3, S4

Le fait de connaître les emplacements F1, F2, F3, F4 dans le système de coordonnées Oxy permet de déterminer l'emplacement du dispositif portable à l'intérieur de l'aire de référence RA2 sans nécessiter une étape d'étalonnage. L'emplacement E1 du dispositif portable H1 est déterminé au moyen de la différence de phase entre les signaux S1 et S2, S3 et S4. Les phases $\varphi1$, $\varphi2$, $\varphi3$, $\varphi4$ des signaux S1, S2, S3, S4 fournis par les sondes P1, P2, P3, P4 aux points F1, F2, F3, F4 sont conformes aux équations suivantes :

$$\text{(équation 12a)} \qquad \varphi 1\,[\text{modulo } 2\pi] = 2\pi * D1/\lambda$$

$$\text{(équation 12b)} \qquad \varphi 2\,[\text{modulo } 2\pi] = 2\pi * D2/\lambda$$

$$\text{(équation 12c)} \qquad \varphi 3\,[\text{modulo } 2\pi] = 2\pi * D3/\lambda$$

$$\text{(équation 12d)} \qquad \varphi 4\,[\text{modulo } 2\pi] = 2\pi * D4/\lambda$$

dans lesquelles D1 est la distance entre E1 et F1, D2 la distance entre E1 et F2, D3 la distance entre E1 et F3 et D4 la distance entre E1 et F4. Il est de nouveau supposé que les valeurs absolues des phases $\varphi 1$, $\varphi 2$, $\varphi 3$, $\varphi 4$ ne peuvent être mesurées puisque la phase initiale de l'onde émise n'est pas connue. Cependant, il est possible de mesurer la différence de phase $\varphi 1$-$\varphi 2$ et $\varphi 3$-$\varphi 4$.

Comme le dispositif portable a été placé en dehors d'une ligne passant par F1 et F2 ou en dehors d'une ligne passant par F3 et F4, la somme D1+D2 n'est plus égale à la distance entre les sondes P1, P2 et la somme D3+D4 n'est pas égale à la distance entre les sondes P3, P4. Par conséquent, la méthode proportionnelle décrite ci-dessus n'est pas appropriée pour déterminer les valeurs de D1 et D2, ou de D3 et D4. Cependant, si chaque distance D1, D2, D3, D4 est inférieure ou égale à la longueur d'onde $\lambda$, les équations 12a à 12d ne sont plus modulo 2n et peuvent être écrites ainsi :

$$\text{(équation 12a')} \qquad D1=\varphi 1*K1$$

$$\text{(équation 12b')} \qquad D2=\varphi 2*K1$$

$$\text{(équation 12c')} \qquad D3=\varphi 3*K1$$

$$\text{(équation 12d')} \qquad D2=\varphi 4*K1$$

dans lesquelles $K1=\lambda/2\pi$.

En combinant les équations 12a' et 12b' et en combinant les équations 12c' et 12d', on obtient :

$$\text{(équation 13a)} \qquad D1-D2=(\varphi 1-\varphi 2)*K1$$

$$\text{(équation 13b)} \qquad D3-D4=(\varphi 3-\varphi 4)*K1$$

L'équation 13a est l'équation d'une première hyperbole dont F1 et F2 sont les foyers, qui comprend une série de points situés à des distances D1 et D2 des sondes P1 et P2 et pour lesquels D1-D2=($\varphi 1$-$\varphi 2$)*K1. L'hyperbole peut être tracée dans le plan Oxy tel qu'illustré sur la figure 2A puisque $\varphi 1$-$\varphi 2$, $\lambda$ et Kl sont connus (ou ses points peuvent être simplement calculés par un dispositif de détermination d'emplacement). L'hyperbole comprend les courbes H12, H12'.

De la même façon, l'équation 13b est l'équation d'une seconde hyperbole dont les foyers sont F3 et F4 et comprenant une série de points à des distances D3 et D4 des sondes P3 et P4 et pour lesquels D3-D4=($\varphi 3$-$\varphi 4$)*K1. La seconde hyperbole peut également être tracée dans le plan Oxy tel qu'illustré sur la figure 2A, puisque $\varphi 1$-$\varphi 2$, $\lambda$ et K1 sont connus, ou ses points calculés. L'hyperbole comprend les courbes H34, H34'.

Une fois que les hyperboles sont tracées ou que leurs points ont été simplement calculés, quatre points d'intersection E1, E1', E1", E1''' sont trouvés. Le point où se situe réellement le dispositif portable, ici le point E1, doit être choisi parmi les points E1, E1', E1", E1'''. La détermination de l'emplacement réel parmi les quatre emplacements possibles est effectuée en utilisant le signe des différences de phase ou le signe dés différences entre les amplitudes M1, M2, M3, M4 des signaux S1, S2, S3, S4 afin de déterminer dans quel quadrant du plan Oxy se situe le point d'intersection recherché, les quatre quadrants étant par exemple définis de la façon suivante : x>0 et y>0, x>0 et y<0, x<0 et y<0, x<0 et y>0.

Par exemple :

- le dispositif portable est situé en E1 si $\varphi1-\varphi2<0$ et $\varphi3-\varphi4<0$ car la phase est plus petite lorsque que le dispositif portable est plus près de la sonde considérée,
- le dispositif portable est situé en E1' si $\varphi1-\varphi2>0$ et $\varphi3-\varphi4<0$,
- le dispositif portable est situé en E1" si $\varphi1-\varphi2>0$ et $\varphi3-\varphi4>0$, et
- le dispositif portable est situé en E1''' si $\varphi1-\varphi2<0$ et $\varphi3-\varphi4>0$.

En utilisant les amplitudes M1, M2, M3, M4 :

- le dispositif portable est situé en E1 si M1-M2>0 et M3-M4>0, car l'amplitude est supérieure lorsque que le dispositif portable est plus près de la sonde considérée,
- le dispositif portable est situé en E1' si M1-M2<0 et M3-M4>0,
- le dispositif portable est situé en E1" si M1-M2<0 et M3-M4<0, et
- le dispositif portable est situé en E1''' si M1-M2>0 et M3-M4<0.

Dans un mode de réalisation, l'identification du quadrant dans lequel le dispositif portable est situé, c'est-à-dire le quadrant dans lequel le point d'intersection recherché est situé, est effectuée avant la recherche de l'intersection des hyperboles, afin de simplifier le calcul en évitant de devoir chercher les quatre points d'intersection.

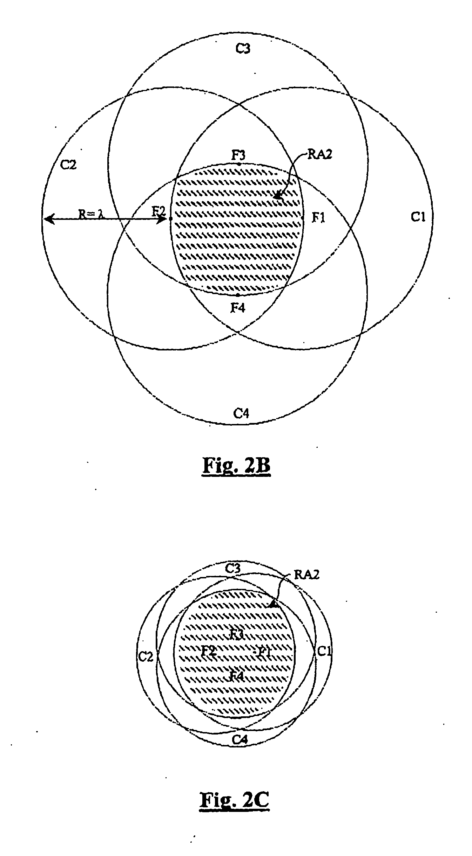

A des fins d'illustration, la figure 2B illustre schématiquement la forme de l'aire de référence RA2 obtenue avec les quatre sondes situées aux points F1, F2, F3, F4, à l'intérieur de laquelle les distances D1, D2, D3 et D4 sont inférieures ou égales à la longueur d'onde $\lambda$. L'aire de référence RA2 est représentée par une zone grisée et correspond à 1a zone d'intersection de quatre cercles C1, C2, C3, C4 dont les centres respectifs sont les points F1, F2, F3, F4 et présentant chacun un rayon R égal à $\lambda$. Dans cet exemple, la distance entre F1 et F2 et la distance entre F3 et F4 est proche de $\lambda$ et F1-F4 se situent à proximité des limites de l'aire de référence. Dans un autre exemple, la figure 2C illustre schématiquement la forme de l'aire de référence RA2 lorsque la distance entre F1 et F2 et la distance entre F3 et F4 est bien inférieure à $\lambda$. Dans ce cas, F1, F2, F3, F4 se situent à l'intérieur de l'aire de référence RA2.

Il apparaîtra clairement à l'homme de l'art que le mode de réalisation du procédé qui vient d'être décrit est susceptible de nombreux autres modes de réalisation. Par exemple, au lieu de mesurer les différences de phase $\varphi1-\varphi2$, $\varphi3-\varphi4$, le procédé peut utiliser les différences de phase $\varphi1-\varphi3$, $\varphi2-\varphi4$ et les hyperboles correspondantes et leurs points d'intersection, ou les différences de phase $\varphi1-\varphi4$, $\varphi2-\varphi3$ et les hyperboles correspondantes et leurs points d'intersection. Egalement, au lieu d'utiliser quatre sondes, il est possible de n'en utiliser que trois P1, P2, P3, et le procédé peut utiliser les différences de phase $\varphi1-\varphi3$, $\varphi2-\varphi3$ et les hyperboles correspondantes et leurs points d'intersection.

Localisation du dispositif portable émetteur au moyen de l'amplitude de S1, S2, S3, S4

Il est également possible de localiser le dispositif portable au moyen d'une mesure de l'amplitude des signaux S1-S4. Comme décrit ci-dessus, il peut être écrit :

$$\text{(équation 6a')} \qquad M1-M0=-K2*D1$$

$$\text{(équation 6b')} \qquad M2-M0=-K2*D2$$

$$\text{(équation 6c')} \qquad M3-M0=-K2*D3$$

$$\text{(équation 6d')} \qquad M4-M0=-K2*D4$$

M0 étant l'amplitude maximale détectée lorsque la distance entre les sondes et l'objet émetteur est nulle, et K2 étant la pente de la fonction affine F susmentionnée. Par conséquent, il peut être écrit :

$$(\text{équation } 14a) \qquad D1-D2=-(1/K2)*(M1-M2)$$

$$(\text{équation } 14b) \qquad D3-D4=-(1/K2)*(M3-M4)$$

L'équation 14a est l'équation d'une première hyperbole dont les foyers sont F1 et F2 et comprenant une série de points à des distances D1 et D2 des sondes P1 et P2 et pour lesquels D1-D2=(1/K2) * (M1-M2). L'hyperbole peut être tracée dans le plan Oxy si K2 est connu (alternativement ses points peuvent calculés au moyen d'un dispositif de détermination d'emplacement). L'équation 14b est l'équation d'une seconde hyperbole dont les foyers sont F3 et F4 et comprenant une série de points à des distances D3 et D4 des sondes P3 et P4 et pour lesquels D3-D4=(1/K2)*(M3-M4). La seconde hyperbole peut également être tracée dans le plan Oxy, ou ses points être simplement calculés. Une fois que les hyperboles sont tracées ou que leurs points sont simplement calculés, quatre points d'intersection E1, E1', E1", E1"' sont trouvés, comme précédemment. Le point où est réellement situé le dispositif portable, ici le point E1, doit être choisi parmi les points E1, E1', E1", E1"'. La détermination de l'emplacement réel entre les quatre emplacements possibles est effectuée en utilisant le signe des différences entre les amplitudes M1, M2, M3, M4 des signaux S1, S2, S3, S4 pour déterminer dans quel quadrant du plan Oxy est situé le point d'intersection recherché, ou le signe des différences de phase. Le quadrant peut également être déterminé avant le calcul des hyperboles, afin de réduire le nombre de points des hyperboles à calculer.

## Second exemple de réalisation d'un système d'interface homme/machine

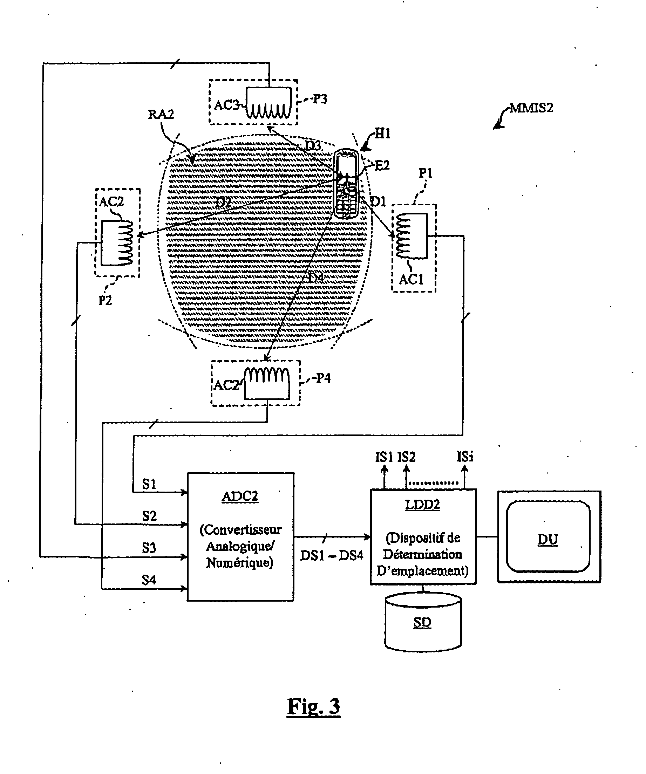

La figure 3 illustre un autre mode de réalisation d'un système d'interface homme/machine MMIS2 configuré pour mettre en oeuvre le second procédé décrit ci-dessus. Le système MMIS2 comprend les sondes P1 à P4. Dans ce mode de réalisation, les sondes P1-P4 sont des sondes de champ magnétique, chacune comprenant une bobine d'antenne AC1-AC4. Les emplacements des sondes sont stockés dans le dispositif LDD2, par l'utilisateur ou lors de la configuration du système en usine. Les bobines d'antenne détectent un champ magnétique émis par le dispositif portable, qui peut par exemple être un dispositif NFC conforme à la norme ISO 14443 ou ISO 15693 et émettant un champ magnétique de 13,56 MHz ($\lambda$=22,1 m). Dans d'autres modes de réalisation, les sondes P1-P4 peuvent être des antennes dipôles configurées pour détecter un champ électrique UHF émis par un lecteur UHF (c'est-à-dire un lecteur prévu pour des transpondeurs UHF ou des puces sans contact).

Tout comme le système MMIS1 précédemment décrit, le système MMIS2 comprend un convertisseur analogique-numérique ADC2, un dispositif de détermination d'emplacement LDD2 et en option, une unité de stockage SD et une unité d'affichage DU.

Lorsque le dispositif portable H1 est placé sur l'aire de référence RA2, les sondes P1-P4 fournissent des signaux de détection S1-S4, respectivement. Les signaux de détection sont numérisés par le convertisseur ADC2, qui fournit ensuite les signaux numérisés DS1'-DS4' au dispositif LDD2. Le dispositif LDD2 effectue les étapes suivantes :

- mesurer $\varphi1$-$\varphi2$,
- mesurer $\varphi3$-$\varphi4$,
- mesurer M1-M2 (optionnel),
- mesurer M3-M4 (optionnel),
- trouver les points d'intersection E1, E1', E1", E1"' des hyperboles H12, H12' et H34, H34' définies par les équations 13a et 13b, et
- déterminer l'emplacement réel du dispositif portable parmi les quatre points d'intersection en utilisant le signe des différences de phase $\varphi1$-$\varphi2$, $\varphi3$-$\varphi4$ et/ou en utilisant le signe des différences d'amplitude M1-M2, M3-M4.

Selon la variante décrite ci-dessus, le dispositif LDD2 peut également d'abord rechercher le quadrant dans lequel le dispositif portable est situé, puis seulement rechercher le(s) point(s) d'intersection des hyperboles qui se situent dans ce quadrant.

Une fois que l'emplacement du dispositif portable a été calculé, le dispositif LDD2 fournit des signaux de contrôle interactifs IS1, IS2...ISi en fonction d'actions assignées aux divers emplacements du dispositif portable. Les signaux de contrôle sont utilisés pour initier des opérations (voir les exemples décrits ci-dessus).

Une étape préliminaire peut être effectuée avant que le système soit utilisé afin de définir les actions à exécuter lorsque le dispositif portable H1 est détecté dans les divers emplacements de l'aire de référence. Cette étape peut consister à choisir des actions à partir d'un menu prédéfini. Par exemple, l'aire de référence pourrait être divisée en plusieurs zones différentes (non illustrées), par exemple dix zones différentes Z1 à Z10, chacune étant assignée à une action spécifique.

Comme indiqué ci-dessus, au lieu de mesurer les différences de phase φ1-φ2, φ3-φ4, le système MMIS2 peut mesurer les différences de phase φ1-φ3, φ2-φ4 et déterminer les points d'intersection des hyperboles correspondantes, ou mesurer les différences de phase φ1-φ4, φ2-φ3 et déterminer les points d'intersection des hyperboles correspondantes. Egalement, au lieu de comprendre quatre sondes, le système MMIS2 peut comprendre seulement trois sondes P1, P2, P3, et peut être configuré pour mesurer les différences de phase φ1-φ3, φ2-φ3 et déterminer les points d'intersection des hyperboles correspondantes. Le système MMIS2 peut également comprendre plus de quatre sondes, par exemple dix sondes agencées en divers emplacements à proximité des limites de l'aire de référence.

Dans un autre mode de réalisation, le dispositif LDD2 effectue les étapes suivantes :

-    mesurer K2 (étape d'étalonnage),
-    mesurer M1,
-    mesurer M2,
-    mesurer M3,
-    mesurer M4,
-    trouver les points d'intersection E1, E1', E1", E1''' des hyperboles définies par les équations 14a et 14b, et
-    déterminer l'emplacement réel du dispositif portable parmi les quatre points d'intersection en utilisant le signe des différences d'amplitude M1-M2, M3-M4.

Dans une variante de ce mode de réalisation, seules trois sondes sont utilisées conjointement avec les équations suivantes :

$$(\text{équation } 15a) \qquad D1-D2=-(1/K2)*(M1'-M2')$$

$$(\text{équation } 15b) \qquad D1-D3=-(1/K2)*(M1'-M3')$$

## Autres modes de réalisation du procédé et du système d'interface homme/machine

Dans d'autres modes de réalisation, le procédé de localisation du dispositif portable émetteur peut inclure une étape d'étalonnage visant à mémoriser différentes valeurs d'amplitude ou de phase en relation avec des emplacements prédéterminés du dispositif portable. Dans ce cas, l'utilisateur définit d'abord l'aire de référence RA1 ou RA2 et agence les sondes P1, P2 ou P1, P2, P3, ou P1 à P4, sur des côtés de l'aire de référence. Puis l'utilisateur active un menu de configuration dans le dispositif LDD1 ou LDD2 et lui fournit un minimum d'informations comme le nombre d'emplacements à l'intérieur de l'aire de référence qu'il souhaite définir et le nombre de sondes.

Le dispositif LDD1 ou LDD2 demande ensuite à l'utilisateur de placer le dispositif portable dans les divers emplacements déclarés, de préférence en gardant la même orientation du dispositif portable. Chaque sonde détecte le champ émis par le dispositif portable. Les signaux de détection numérisés DS1, DS2 ou DS1-DS3 ou DS1-DS4 sont analysés par le dispositif LDD1 ou LDD2 afin de collecter des informations concernant la différence d'amplitude et/ou de phase des signaux S1, S2 ou S1-S3 ou S1-S4 en rapport avec chaque emplacement. Ces mesures sont de préférence répétées jusqu'à ce qu'un ensemble de valeurs soit collecté pour chaque sonde et chaque emplacement. Les variations des valeurs mesurées dans chaque emplacement représentent les variations qui peuvent être rencontrées pendant le fonctionnement du dispositif, par exemple si l'utilisateur ne place pas le dispositif portable aux emplacements avec exactement la même orientation chaque fois, ou si divers dispositifs portables sont utilisés. Une fois que les valeurs d'amplitude et/ou de phase des signaux de détection ont été enregistrées pour chaque sonde et chaque emplacement, des opérations peuvent être assignées à chaque emplacement. L'aptitude du système à distinguer divers emplacements peut être prise en considération. Par exemple, si les emplacements sont trop rapprochés ou s'il n'y a pas assez de différence d'amplitude ou de phase entre un emplacement et un autre, le système peut ne pas être capable de déterminer quelle opération l'utilisateur souhaite effectuer. Dans ce cas, l'utilisateur peut demander à choisir un intervalle plus grand entre les emplacements en agrandissant la taille de l'aire de référence ou en diminuant le nombre d'emplacements à l'intérieur de l'aire de référence. Alternativement, l'utilisateur pourrait ajouter des sondes supplémentaires ou repositionner les sondes.

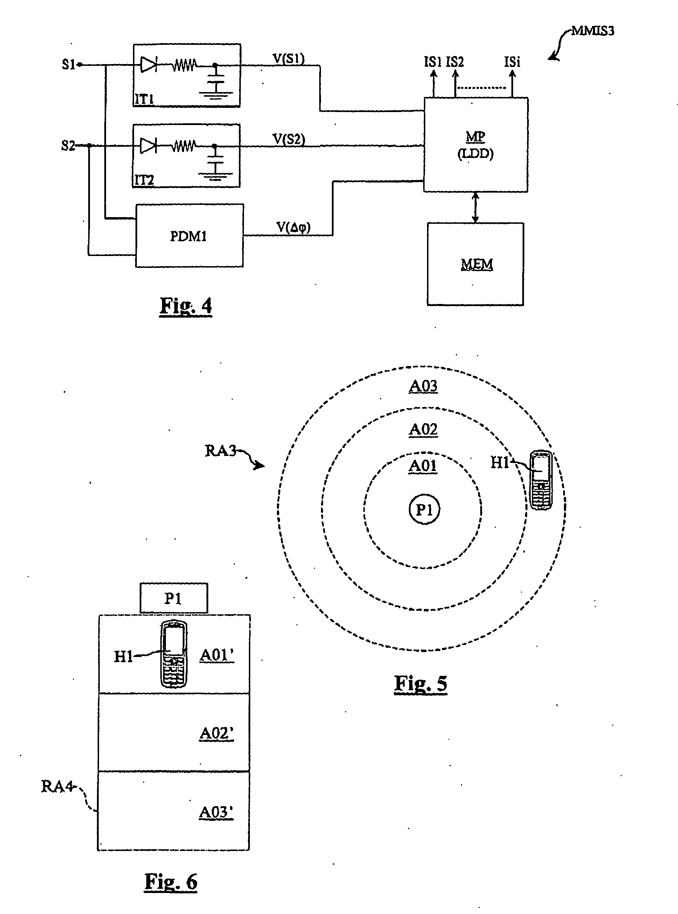

La figure 4 illustre un troisième mode de réalisation d'un système d'interface homme/machine MMIS3 selon l'invention (l'aire de référence et les sondes ne sont pas illustrées). Le système MMIS3 comprend deux intégrateurs IT1, IT2, un module de détection de différence de phase PDM1, un microprocesseur MP, et une mémoire MEM. Chaque intégrateur IT1, IT2 comprend par exemple une diode, une résistance, un condensateur et une connexion à la masse. Les intégrateurs IT1, IT2 reçoivent des signaux de détection alternatifs (signaux CA) S1, S2 des sondes P1, P2 et les convertissent en tensions continues démodulées (tensions cc) V(S1) et V(S2), dont les valeurs dépendent de l'amplitude des signaux S1, S2 et qui sont fournies au microprocesseur MP. Le module de détection de différence de phase PDM1 peut être de type analogique ou câblé. Le module PDM1 reçoit des signaux CA S1, S2 et fournit la différence de phase $\Delta\varphi=\varphi(S1)-\varphi(S2)$ au microprocesseur PM sous forme d'une tension cc $V(\Delta\varphi)$, dont la valeur dépend de la différence de phase.

Le microprocesseur MP reçoit des signaux V(S1), V(S2), V($\Delta\varphi$) et effectue la détermination de l'emplacement selon au moins l'une des méthodes décrites ci-dessus. Les signaux IS1, IS2...ISi sont fournis à des dispositifs externes (non illustrés). Dans ce mode de réalisation, il n'est pas nécessaire d'effectuer la numérisation des signaux S1, S2. Bien sûr, il est possible d'étendre ce mode de réalisation à plus de deux sondes en ajoutant des intégrateurs et des modules de détection de phase.

La figure 5 illustre un mode de réalisation du procédé selon l'invention dans lequel une seule sonde est utilisée. Une sonde P1 est situé au centre d'une aire de référence circulaire RA3 avec plusieurs emplacements circulaires et concentriques, A01, A02, A03. La forme circulaire de l'aire de référence RA3 permet, par exemple, à plusieurs utilisateurs autour d'une table d'utiliser un téléphone portable H1 les uns après les autres pour initier diverses actions interactives.

Alternativement, la figure 6 illustre une sonde P1 agencée sur un côté d'une aire de référence RA4, qui comprend plusieurs emplacements, par exemple A01, A02, A03 ou plus. L'amplitude du signal détecté diminue au fur et à mesure que le dispositif portable est éloigné de la sonde.

De nombreux autres modes de réalisation du procédé de localisation d'un dispositif portable émetteur peuvent être prévus par l'homme de l'art. Comme indiqué précédemment, les dispositifs portables NFC sont équipés d'un lecteur NFC qui émet un champ magnétique et qui peut être détecté par des sondes de champ magnétique, par exemple des sondes comprenant des bobines d'antenne de détection, des capteurs à effet Hall, etc.

De plus, dans certains modes de réalisation, le dispositif de détermination d'emplacement LDD1, LDD2 effectue d'autres calculs afin de déterminer, en se basant sur les changements d'emplacements du dispositif portable, la vitesse de déplacement, ainsi que les variations de vitesse (c'est-à-dire les accélérations et les décélérations). Des actions sont associées à une variation de vitesse supérieure à un premier seuil et/ou inférieure à un second seuil. Par exemple, déplacer lentement le dispositif portable vers la sonde P1 permet de passer à la diapositive suivante d'une présentation visuelle, alors que déplacer rapidement le dispositif portable vers la sonde P1 permet d'aller directement à la fin de la présentation visuelle.

Le dispositif portable peut également être un jeton électronique comprenant une source d'alimentation et permettant d'émettre un champ électrique, un champ magnétique, ou les deux.

L'homme de l'art notera également que le terme « emplacement » peut avoir différents sens selon le mode de réalisation de l'invention, et que le terme « aire » ne doit pas être interprété comme étant spécifiquement limité à un espace unidimensionnel ou bidimensionnel. En fait, la détection de mouvements du dispositif portable peut s'étendre suivant des axes qui sont perpendiculaires à la surface de travail, définissant ainsi un espace de référence tridimensionnel.

L'homme de l'art notera également que différents dispositifs portables, par exemple un téléphone portable et un dispositif NFC, peuvent être utilisés au sein d'une seule aire de détection, pourvu qu'ils ne fonctionnent pas exactement sur la même fréquence ou que les champs de différents types sont utilisés pour les différentier, par exemple le champ électrique émis par un téléphone portable et le champ magnétique émis par un téléphone portable NFC ou un dispositif NFC. Les ensembles de valeurs pour le téléphone portable sont programmés pour exécuter un certain ensemble d'actions interactives, alors que les ensembles de valeurs pour le téléphone ou le dispositif NFC sont configurés pour exécuter un ensemble différent d'actions interactives.

**Revendications**

1. Procédé pour effectuer au moins une action interactive au moyen d'un système d'interface homme/machine, comprenant :

   - une étape de localisation d'un dispositif portable émetteur (H1) comprenant des moyens de communication émettant un champ électrique et/ou un champ magnétique, tel qu'un téléphone portable émettant un champ électrique ou un dispositif NFC émettant un champ magnétique,

   **caractérisé en ce que** l'étape de localisation comprend des étapes consistant à :

- définir une aire de référence (RA1, RA2, RA3, RA4) d'une surface de l'ordre de quelques dizaines de centimètres carrés à quelques mètres carrés,
- définir des emplacements à l'intérieur de l'aire de référence, et assigner des actions interactives aux différents emplacements,
- disposer au moins une sonde de champ électrique et/ou de champ magnétique (P1-P4) à proximité ou à l'intérieur de l'aire de référence,
- sélectionner une action interactive en disposant le dispositif portable, à l'intérieur de l'aire de référence (RA1, RA2, RA3, RA4), à un emplacement correspondant à l'action interactive,
- recevoir de la sonde un signal de détection (S1-S4) du champ électrique et/ou du champ magnétique émis par le dispositif portable, et
- analyser le signal de détection fourni par la sonde et en déterminer l'emplacement du dispositif portable à l'intérieur de l'aire de référence,
- au moyen du système d'interface homme/machine, initier l'action interactive assignée à l'emplacement déterminé, l'action interactive comprenant une étape consistant à fournir des signaux de contrôle interactifs (IS1, IS2...ISi) à un dispositif externe autre que le dispositif portable, configuré pour effectuer l'action interactive.

2.  Procédé selon la revendication 1, dans lequel l'analyse du signal de détection comprend des étapes consistant à analyser l'amplitude du signal de détection afin de fournir une valeur d'amplitude, et à déterminer à partir de la valeur d'amplitude l'emplacement du dispositif portable à l'intérieur de l'aire de référence.

3.  Procédé selon l'une des revendications 1 ou 2, dans lequel l'analyse du signal de détection comprend des étapes consistant à analyser la phase du signal de détection afin de fournir une valeur de phase, et à déterminer à partir de la valeur de phase l'emplacement du dispositif portable à l'intérieur de l'aire de référence.

4.  Procédé selon l'une des revendications 1 à 3, comprenant des étapes consistant à :

    - disposer au moins deux sondes de champ électrique et/ou de champ magnétique (P1-P4) à proximité ou à l'intérieur de l'aire de référence (RA1-RA4),
    - recevoir des sondes au moins deux signaux de détection (S1-S4), et
    - déterminer l'emplacement du dispositif portable à l'intérieur de l'aire de référence à partir de la différence de phase ($\varphi1$-$\varphi2$) entre les signaux de détection.

5.  Procédé selon l'une des revendications 1 à 4, comprenant des étapes consistant à :

    - disposer au moins deux sondes de champ électrique et/ou de champ magnétique (P1-P4) à proximité ou à l'intérieur de l'aire de référence (RA1-RA4),
    - recevoir des sondes au moins deux signaux de détection (S1-S4), et
    - déterminer l'emplacement du dispositif portable à l'intérieur de l'aire de référence à partir des amplitudes (M1-M4) des signaux de détection.

6.  Procédé selon l'une des revendications 1 à 4, comprenant des étapes consistant à :

    - disposer au moins trois sondes de champ électrique et/ou de champ magnétique (P1-P4) à proximité ou à l'intérieur de l'aire de référence (RA1-RA4),
    - recevoir des sondes au moins trois signaux de détection (S1-S4),
    - déterminer une première différence de phase ($\varphi1$-$\varphi2$) entre une première paire (S1, S2) de signaux de détection,
    - déterminer au moins une seconde différence de phase ($\varphi1$-$\varphi3$, $\varphi2$-$\varphi4$) entre une seconde paire (S1, S3 ; S3, S4) de signaux de détection, et
    - déterminer l'emplacement du dispositif portable à l'intérieur de l'aire de référence à partir des première et seconde différences de phase.

7.  Système d'interface homme/machine (MMIS1, MMIS2) à utiliser avec un dispositif portable (H1) comprenant des moyens de communication émettant un champ électrique et/ou un champ magnétique, tel qu'un téléphone portable émettant un champ électrique ou un dispositif NFC émettant un champ magnétique, et comprenant :

    - au moins une sonde de champ électrique et/ou de champ magnétique (P1-P4) fournissant un signal de détection (S1-S4),
    - un dispositif (LDD1, LDD2) de détermination d'emplacement,

**caractérisé en ce que** le dispositif de détermination d'emplacement est configuré pour :

- assigner des actions interactives à différents emplacements à l'intérieur d'une aire de référence d'une surface de l'ordre de quelques dizaines de centimètres carrés à quelques mètres carrés,
- recevoir de la sonde le signal (S1-S4) de détection du champ électrique et/ou du champ magnétique émis par le dispositif portable,
- analyser le signal de détection et en déterminer l'emplacement du dispositif portable à l'intérieur de l'aire de référence (RA1, RA2, RA3, RA4), et
- initier au moins une action interactive assignée à l'emplacement déterminé, l'action interactive comprenant une étape consistant à fournir des signaux de contrôle interactifs (IS1, IS2...ISi) à un dispositif externe autre que le dispositif portable configuré pour effectuer l'action interactive,

le système permettant ainsi à un utilisateur de sélectionner des actions interactives en disposant le dispositif portable à des emplacements déterminés correspondant aux actions interactives, à l'intérieur de l'aire de référence.

8. Système d'interface homme/machine selon la revendication 7, dans lequel le dispositif de détermination d'emplacement est configuré pour déterminer l'emplacement du dispositif portable à partir de la valeur d'amplitude du signal de détection.

9. Système d'interface homme/machine selon l'une des revendications 7 ou 8, dans lequel le dispositif de détermination d'emplacement est configuré pour déterminer l'emplacement du dispositif portable à partir de la valeur de phase du signal de détection.

10. Système d'interface homme/machine selon l'une des revendications 7 à 9, comprenant au moins deux sondes de champ électrique et/ou de champ magnétique (P1-P4) à proximité ou à l'intérieur de l'aire de référence (RA1-RA4), fournissant des signaux de détection (S1-S4), et dans lequel le dispositif de détermination d'emplacement est configuré pour déterminer l'emplacement du dispositif portable à l'intérieur de l'aire de référence à partir de la différence de phase ($\varphi1$-$\varphi2$) entre les signaux de détection.

11. Système d'interface homme/machine selon l'une des revendications 7 à 10, comprenant au moins deux sondes de champ électrique et/ou de champ magnétique (P1-P4) à proximité ou à l'intérieur de l'aire de référence (RA1-RA4), fournissant des signaux de détection (S1-S4), et dans lequel le dispositif de détermination d'emplacement est configuré pour déterminer l'emplacement du dispositif portable à l'intérieur de l'aire de référence à partir des amplitudes (M1-M4) des signaux de détection.

12. Système d'interface homme/machine selon l'une des revendications 7 à 11, comprenant au moins trois sondes de champ électrique et/ou de champ magnétique (P1-P4) à proximité ou à l'intérieur de l'aire de référence (RA1-RA4), les sondes fournissant des signaux de détection (S1-S4), et dans lequel le dispositif de détermination d'emplacement est configuré pour :

- déterminer une première différence de phase ($\varphi1$-$\varphi2$) entre une première paire (S1, S2) de signaux de détection,
- déterminer au moins une seconde différence de phase ($\varphi1$-$\varphi3$, $\varphi2$-$\varphi4$) entre une seconde paire (S1, S3 ; S3, S4) de signaux de détection, et
- déterminer l'emplacement du dispositif portable à l'intérieur de l'aire de référence à partir des première et seconde différences de phase.

13. Système d'interface homme/machine selon l'une des revendications 7 à 12, dans lequel le dispositif de détermination d'emplacement est configuré pour enregistrer, pour chaque emplacement prédéterminé, un ensemble de valeurs d'amplitude et/ou de phase des signaux de détection lorsque le dispositif portable est situé sur l'emplacement.

**Claims**

1. A method for performing at least one interactive action by means of a man/machine interface system, comprising:

- a step of locating an emitting handheld device (H1) comprising communication means emitting an electric field and/or magnetic field, such as a mobile telephone emitting an electric field or an NFC device emitting a magnetic field,

**characterized in that** the locating step comprises:

- defining a reference area (RA1, RA2, RA3, RA4) with a surface on the order of several tens of centimeters squared to several meters squared,
- defining locations within the reference area, and assigning interactive actions to the different locations,
- arranging at least one electric field and/or magnetic field probe (P1-P4) proximate to or inside the reference area,
- selecting an interactive action by arranging the handheld device within the reference area (RA1, RA2, RA3, RA4) at a location corresponding to the interactive action,
- receiving from the probe a detection signal (S1-S4) of the electric field and/or magnetic field emitted by the handheld device,
- analyzing the detection signal supplied by the probe and determining therefrom the location of the handheld device within the reference area,
- by means of the man/machine interface system, initiating the interactive action assigned to the determined location, the interactive action comprising a step of supplying interactive control signals (IS1, IS2... ISi) to an external device other than the external device, configured to perform the interactive action.

2. A method according to claim 1, wherein analyzing the detection signal comprises analyzing the magnitude of the detection signal to supply a magnitude value, and determining from the magnitude value the location of the handheld device within the reference area.

3. A method according to one of claims 1 or 2, wherein analyzing the detection signal comprises analyzing the phase of the detection signal to supply a phase value, and determining from the phase value the location of the handheld device within the reference area.

4. A method according to one of claims 1 to 3, comprising:

- arranging at least two electric field and/or magnetic field probes (P1-P4) proximate to or inside the reference area (RA1-RA4),
- receiving from the probes at least two detection signals (S1-S4), and
- determining the location of the handheld device within the reference area from the phase difference ($\varphi1-\varphi2$) between the detection signals.

5. A method according to one of claims 1 to 4, comprising:

- arranging at least two electric field and/or magnetic field probes (P1-P4) proximate to or inside the reference area (RA1-RA4),
- receiving from the probes at least two detection signals (S1-S4), and
- determining the location of the handheld device within the reference area from the magnitudes (M1-M4) of the detection signals.

6. A method according to one of claims 1 to 4, comprising:

- arranging at least three electric field and/or magnetic field probes (P1-P4) proximate to or inside the reference area (RA1-RA4),
- receiving from the probes at least three detection signals (S1-S4),
- determining a first phase difference ($\varphi1-\varphi2$) between a first pair (S1, S2) of detection signals,
- determining at least a second phase difference ($\varphi1-\varphi3$, $\varphi2-\varphi4$) between a second pair (S1, S3; S3, S4) of detection signals, and
- determining the location of the handheld device within the reference area from the first and second phase differences.

7. A man/machine interface system (MMIS1, MMIS2) for use with a handheld device (H1) comprising communication means emitting an electric field and/or magnetic field, such as a mobile telephone emitting an electric field or an NFC device emitting a magnetic field, and comprising:

- at least one electric field and/or magnetic field probe (P1-P4) supplying a detection signal (S1-S4),
- a location determining device (LDD1, LDD2),

**characterized in that** the location determining device (LDD1, LDD2) is configured to:

- assign interactive actions to different locations within a reference area with a surface on the order of several tens of centimeters squared to several meters squared,
- receive, from the probe, the detection signal (S1-S4) of the electric field and/or magnetic field emitted by the handheld device,
- analyze the detection signal and determine therefrom the location of the handheld device within the reference area (RA1, RA2, RA3, RA4), and
- initiate at least one interactive action assigned to the determined location, the interactive action comprising a step of supplying interactive control signals (IS1, IS2... ISi) to an external device other than the handheld device configured to perform the interactive action,

the system thus allowing a user to select interactive actions by placing the handheld device at determined locations, corresponding to interactive actions, within the reference area.

8. A man/machine interface system according to claim 7, wherein the location determining device is configured to determine the location of the handheld device from the magnitude value of the detection signal.

9. A man/machine interface system according to one of claims 7 or 8, wherein the location determining device is configured to determine the location of the handheld device from the phase value of the detection signal.

10. A man/machine interface system according to one of claims 7 to 9, comprising at least two electric field and/or magnetic field probes (P1-P4) proximate to or inside the reference area (RA1-RA4), supplying detection signals (S1-S4), and wherein the location determining device is configured to determine the location of the handheld device within the reference area from the phase difference ($\varphi1-\varphi2$) between the detection signals.

11. A man/machine interface system according to one of claims 7 to 10, comprising at least two electric field and/or magnetic field probes (P1-P4) proximate to or inside the reference area (RA1-RA4), supplying detection signals (S1-S4), and wherein the location determining device is configured to determine the location of the handheld device within the reference area from the magnitudes (M1-M4) of the detection signals.

12. A man/machine interface system according to one of claims 7 to 11, comprising at least three electric field and/or magnetic field probes (P1-P4) proximate to or inside the reference area (RA1-RA4), the probes supplying detection signals (S1-S4), and wherein the location determining device is configured to:

- determine a first phase difference ($\varphi1-\varphi2$) between a first pair (S1, S2) of detection signals,
- determine at least a second phase difference ($\varphi1-\varphi3$, $\varphi2-\varphi4$) between a second pair (S1, S3; S3, S4) of detection signals, and
- determine the location of the handheld device within the reference area from the first and second phase differences.

13. A man/machine interface system according to one of claims 7 to 12, wherein the location determining device is configured to store, for each predetermined location, a set of magnitude and/or phase values of the detection signals when the handheld device is placed on the location.

**Patentansprüche**

1. Verfahren zur Durchführung wenigstens eines interaktiven Vorgangs anhand eines Mensch-Maschine-Schnittstellensystems, umfassend :

- einen Schritt der Lokalisierung einer tragbaren Sendevorrichtung (H1), die ein Spannungsfeld und/oder ein Magnetfeld emittierende Kommunikationsmittel umfasst, wie ein ein Spannungsfeld emittierendes tragbares Mobiltelefon oder eine ein Magnetfeld emittierende NFC-Vorrichtung,

**dadurch gekennzeichnet, dass** der Schritt der Lokalisierung Schritte umfasst, die darin bestehen:

- eine Referenzfläche (RA1, RA2, RA3, RA4) einer Fläche in der Größenordnung von ein paar Dutzend Quadratzentimeter bis ein paar Quadratmeter zu definieren,
- Plätze innerhalb der Referenzfläche zu definieren, und den verschiedenen Plätzen interaktive Vorgänge zuzuweisen,
- wenigstens einen Spannungsfeld- und/oder Magnetfeld-Messkopf (P1-P4) in der Nähe von oder innerhalb der Referenzfläche anzuordnen,
- einen interaktiven Vorgang auszuwählen, indem die tragbare Vorrichtung innerhalb der Referenzfläche (RA1, RA2, RA3, RA4) an einem dem interaktiven Vorgang entsprechenden Platz angeordnet wird,
- ein vom Messkopf abgegebenes Signal (S1-S4) der Erfassung des von der tragbaren Vorrichtung emittierten Spannungsfelds und/oder Magnetfelds zu empfangen, und
- das vom Messkopf abgegebene Erfassungssignal zu analysieren und daraus den Platz der tragbaren Vorrichtung innerhalb der Referenzfläche zu bestimmen,
- anhand des Mensch-Maschine-Schnittstellensystems, den dem bestimmten Platz zugewiesenen interaktiven Vorgang zu initiieren, wobei der interaktive Vorgang einen Schritt umfasst, der darin besteht, interaktive Kontrollsignale (IS1, IS2...ISi) an eine externe Vorrichtung, die nicht die tragbare Vorrichtung und zur Durchführung des interaktiven Vorgangs konfiguriert ist, abzugeben.

2. Verfahren nach Anspruch 1, bei dem die Analyse des Erfassungssignals Schritte umfasst, die darin bestehen, die Erfassungssignalamplitude zu analysieren, um einen Amplitudenwert zu erhalten, und den Platz der tragbaren Vorrichtung innerhalb der Referenzfläche aus dem Amplitudenwert zu bestimmen.

3. Verfahren nach einem der Ansprüche 1 oder 2, bei dem die Analyse des Erfassungssignals Schritte umfasst, die darin bestehen, die Erfassungssignalphase zu analysieren, um einen Phasenwert zu erhalten, und den Platz der tragbaren Vorrichtung innerhalb der Referenzfläche aus dem Phasenwert zu bestimmen.

4. Verfahren nach einem der Ansprüche 1 bis 3, umfassend Schritte, die darin bestehen:

- wenigstens zwei Spannungsfeld- und/oder Magnetfeld-Messköpfe (P1-P4) in der Nähe von oder innerhalb der Referenzfläche (RA1-RA4) anzuordnen,
- wenigstens zwei von den Messköpfen abgegebene Erfassungssignale (S1-S4) zu empfangen, und
- den Platz der tragbaren Vorrichtung innerhalb der Referenzfläche aus der Phasendifferenz ($\varphi 1$-$\varphi 2$) zwischen den Erfassungssignalen zu bestimmen.

5. Verfahren nach einem der Ansprüche 1 bis 4, umfassend Schritte, die darin bestehen:

- wenigstens zwei Spannungsfeld- und/oder Magnetfeld-Messköpfe (P1-P4) in der Nähe von oder innerhalb der Referenzfläche (RA1-RA4) anzuordnen,
- wenigstens zwei von den Messköpfen abgegebene Erfassungssignale (S1-S4) zu empfangen, und
- den Platz der tragbaren Vorrichtung innerhalb der Referenzfläche aus den Erfassungssignalamplituden (M1-M4) zu bestimmen.

6. Verfahren nach einem der Ansprüche 1 bis 4, umfassend Schritte, die darin bestehen:

- wenigstens drei Spannungsfeld- und/oder Magnetfeld-Messköpfe (P1-P4) in der Nähe von oder innerhalb der Referenzfläche (RA1-RA4) anzuordnen,
- wenigstens drei von den Messköpfen abgegebene Erfassungssignale (S1-S4) zu empfangen,
- eine erste Phasendifferenz ($\varphi 1$-$\varphi 2$) zwischen einem ersten Paar (S1, S2) von Erfassungssignalen zu bestimmen,
- wenigstens eine zweite Phasendifferenz ($\varphi 1$-$\varphi 3$, $\varphi 2$-$\varphi 4$) zwischen einem zweiten Paar (S1, S3; S3, S4) von Erfassungssignalen zu bestimmen, und
- den Platz der tragbaren Vorrichtung innerhalb der Referenzfläche aus der ersten und der zweiten Phasendifferenz zu bestimmen.

7. Mensch-Maschine-Schnittstellensystem (MMIS1, MMIS2) zur Verwendung mit einer tragbaren Vorrichtung (H1), die ein Spannungsfeld und/oder ein Magnetfeld emittierende Kommunikationsmittel umfasst, wie ein ein Spannungsfeld emittierendes tragbares Mobiltelefon oder eine ein Magnetfeld emittierende NFC-Vorrichtung, und umfassend:

- wenigstens einen Spannungsfeld- und/oder Magnetfeld-Messkopf (P1-P4), d e r ein Erfassungssignal (S1-S4) abgibt,
- eine Platzbestimmungsvorrichtung (LDD1, LDD2),

**dadurch gekennzeichnet, dass** die Platzbestimmungsvorrichtung konfiguriert ist, um:

- interaktive Vorgänge verschiedenen Plätzen innerhalb einer Referenzfläche einer Fläche in der Größenordnung von ein paar Dutzend Quadratzentimeter bis ein paar Quadratmeter zuzuweisen,
- das vom Messkopf abgegebene Signal (S1-S4) der Erfassung des von der tragbaren Vorrichtung emittierten Spannungsfelds und/oder Magnetfelds zu empfangen,
- das Erfassungssignal zu analysieren und daraus den Platz der tragbaren Vorrichtung innerhalb der Referenzfläche (RA1, RA2, RA3, RA4) zu bestimmen, und
- wenigstens einen interaktiven dem bestimmten Platz zugewiesenen Vorgang zu initiieren, wobei der interaktive Vorgang einen Schritt umfasst, der darin besteht, interaktive Kontrollsignale (IS1, IS2...ISi) an eine externe Vorrichtung, die nicht die tragbare Vorrichtung und zur Durchführung des interaktiven Vorgangs konfiguriert ist, abzugeben,

und das System es einem Benutzer ermöglicht, interaktive Vorgänge auszuwählen, indem die tragbare Vorrichtung an bestimmten, den interaktiven Vorgängen entsprechenden Plätzen innerhalb der Referenzfläche, angeordnet wird.

8. Mensch-Maschine-Schnittstellensystem nach Anspruch 7, bei dem die Platzbestimmungsvorrichtung konfiguriert ist, um den Platz der tragbaren Vorrichtung aus dem Amplitudenwert des Erfassungssignals zu bestimmen.

9. Mensch-Maschine-Schnittstellensystem nach einem der Ansprüche 7 oder 8, bei dem die Platzbestimmungsvorrichtung konfiguriert ist, um den Platz der tragbaren Vorrichtung aus dem Phasenwert des Erfassungssignals zu bestimmen.

10. Mensch-Maschine-Schnittstellensystem nach einem der Ansprüche 7 bis 9, das wenigstens zwei Spannungsfeld - und/oder Magnetfeld-Messköpfe (P1-P4) in der Nähe von oder innerhalb der Referenzfläche (RA1-RA4) umfasst, das Erfassungssignale (S1-S4) abgibt, und bei dem die Platzbestimmungsvorrichtung konfiguriert ist, um den Platz der tragbaren Vorrichtung innerhalb der Referenzfläche aus der Phasendifferenz ($\varphi1-\varphi2$) zwischen den Erfassungssignalen zu bestimmen.

11. Mensch-Maschine-Schnittstellensystem nach einem der Ansprüche 7 bis 10, das wenigstens zwei Spannungsfeld- und/oder Magnetfeld-Messköpfe (P1-P4) in der Nähe von oder innerhalb der Referenzfläche (RA1-RA4) umfasst, das Erfassungssignale (S1-S4) abgibt, und bei dem die Platzbestimmungsvorrichtung konfiguriert ist, um den Platz der tragbaren Vorrichtung innerhalb der Referenzfläche aus den Erfassungssignalamplituden (M1-M4) zu bestimmen.

12. Mensch-Maschine-Schnittstellensystem nach einem der Ansprüche 7 bis 11, umfassend wenigstens drei Spannungsfeld- und/oder Magnetfeld-Messköpfe (P1-P4) in der Nähe von oder innerhalb der Referenzfläche (RA1-RA4), bei dem die Messköpfe Erfassungssignale (S1-S4) abgeben, und bei dem die Platzbestimmungsvorrichtung konfiguriert ist, um

- eine erste Phasendifferenz ($\varphi1-\varphi2$) zwischen einem ersten Paar (S1, S2) von Erfassungssignalen zu bestimmen,
- wenigstens eine zweite Phasendifferenz ($\varphi1-\varphi3$, $\varphi2-\varphi4$) zwischen einem zweiten Paar (S1, S3; S3, S4) von Erfassungssignalen zu bestimmen, und
- den Platz der tragbaren Vorrichtung innerhalb der Referenzfläche aus der ersten und der zweiten Phasendifferenz zu bestimmen.

13. Mensch-Maschine-Schnittstellensystem nach einem der Ansprüche 7 b i s 1 2, bei dem die Platzbestimmungsvorrichtung konfiguriert ist, um für jeden vorbestimmten Platz einen Satz von Amplituden - und/oder Phasenwerten der Erfassungssignale zu registrieren, wenn die tragbare Vorrichtung sich auf dem Platz befindet.

**Fig. 1**

**Fig. 2A**

**Fig. 2B**

**Fig. 2C**

**Fig. 3**

**Fig. 4**

**Fig. 5**

**Fig. 6**

**EP 2 241 902 B1**

## RÉFÉRENCES CITÉES DANS LA DESCRIPTION

**Documents brevets cités dans la description**

- US 20060284874 A